# EUROPÄISCHE PATENTSCHRIFT

(11) **EP 4 590 616 B1**
(45) Veröffentlichungstag und Bekanntmachung des Hinweises auf die Patenterteilung: **27.05.2026**
(21) Anmeldenummer: 23772405.9
(22) Anmeldetag: 13.09.2023
(51) Int. Cl.: B65H 61/00, B65H 75/36, B65H 75/40

(54) **VORRICHTUNG ZUM ABROLLEN EINES BIEGSAMEN STABFÖRMIGEN OBJEKTS**
APPARATUS FOR UNROLLING A FLEXIBLE ROD-SHAPED OBJECT
APPAREIL POUR DÉROULER UN OBJET EN FORME DE TIGE FLEXIBLE

(30) Priorität: 22.09.2022 AT 507322022
(43) Veröffentlichungstag der Anmeldung: 30.07.2025
(73) Patentinhaber: Haslacher & Haslacher Immobilien GmbH, 5303 Thalgau (AT)
(72) Erfinder: HASLACHER, Andreas, 5310 Mondsee (AT); HASLACHER, Helmut, 5310 Mondsee (AT)
(74) Vertreter: Babeluk Patentanwälte GmbH
(86) Internationale Anmeldenummer: PCT/AT2023/060320
(87) Internationale Veröffentlichungsnummer: WO 2024/059888

(56) Entgegenhaltungen:
- WO-A1-2018/112411
- WO-A1-2019/183439
- US-A- 2 718 376
- US-A- 4 092 780
- US-A- 6 016 609
- US-B1- 6 722 603

## Beschreibung

Die vorliegende Erfindung betrifft eine Vorrichtung zum Abrollen eines biegsamen stabförmigen Objekts gemäß dem Oberbegriff von Patentanspruch 1.

Stabförmige Objekte im Sinn der vorliegenden Erfindung sind beispielsweise Einzugsfedern für Kabel. Diese werden häufig in Abrollvorrichtungen aufbewahrt und bei Gebrauch aus diesen entnommen. Nach dem Gebrauch werden solche Einzugsfedern wieder in die Abrollvorrichtung zurückgeführt. Die typische Verwendungsweise ist es dabei, dass die Einzugsfeder in eine Leerverrohrung an einer ersten Öffnung, beispielsweise bei einer Dose, eingeführt und so lange vorgeschoben wird, bis sie an einer zweiten Öffnung wieder aus der Leerverrohrung austritt. Dann wird ein einzuziehendes Kabel an der Spitze der Einzugsfeder befestigt und diese wird aus der Leerverrohrung herausgezogen, bis das Kabel an der ersten Öffnung austritt.

Eine typische Bauart solcher Abrollvorrichtungen ist es, wie oben beschrieben eine Trommel vorzusehen, auf deren Innenseite der Stab oder die Einzugsfeder im aufgerollten Zustand aufgenommen wird. Dadurch kann die natürliche Vorspannung der Einzugsfeder gewährleisten, dass sich der Stab oder die Einzugsfeder an die Innenseite der Trommel anlegt.

Um die einzuziehenden Kabel bereits vor dem Einziehen passend ablängen zu können, ist es wünschenswert, über die Länge der aus der Abrollvorrichtung entnommenen Einziehfeder Bescheid zu wissen. Es sind daher Abrollvorrichtungen bekannt, die mit einer angekoppelten Längenmesseinrichtung versehen sind. Solche Lösungen sind beispielsweise in der US 9,417,05 B oder der US 4,092,780 A offenbart. Das macht diese Abrollvorrichtungen relativ sperrig und aufgrund von erforderlichen Umlenkungen auch ungenau.

Aus der WO 2019/195893 A1, der US 6,016,609 A und anderen Druckschriften sind Abrollvorrichtungen bekannt, bei denen eine Schnur, ein Band oder ein flexibler Stab von der Außenseite einer Trommel abgerollt werden kann und danach eine Längenmesseinrichtung vorgesehen ist. Diese Lösungen sind schlecht für flexible, aber relativ biegesteife Einziehfedern geeignet.

Die WO 2018/112411 A1 beschreibt eine Abrollvorrichtung, bei der die Drehung der Trommel gemessen wird, um eine Information über die Länge der aus der Abrollvorrichtung entnommenen Einziehfeder zu erhalten. Da die Umfangslänge der Einziehfeder in der Trommel naturgemäß von der Dicke des Wickels abhängt, ist eine solche Vorrichtung sehr ungenau.

Aufgabe der Erfindung ist es, diese Nachteile zu vermeiden und eine Vorrichtung der oben beschriebenen Art anzugeben, die kompakt, genau, praktikabel und formschön ist. Eine weitere Aufgabe ist es, eine wartungsfreundliche Lösung bereitzustellen.

Erfindungsgemäß werden diese Aufgaben durch die Merkmale von Patentanspruch 1 gelöst.

Ein wesentlicher Vorteil der erfindungsgemäßen Lösung besteht darin, dass der Innenraum der Trommel, der nicht mehr zur Aufnahme des stabförmigen Objekts benötigt wird, teilweise von der Längenmesseinrichtung in Anspruch genommen wird. Typischerweise befindet sich damit die Längenmesseinrichtung auch im Inneren des Gehäuses, abgesehen von einer Anzeige und gegebenenfalls einem Rückstellknopf. Damit kann die Längenmesseinrichtung geschützt vor äußeren Einflüssen, wie etwa Verschmutzung, angeordnet werden.

Durch die erfindungsgemäße Lösung ist es möglich, dass das stabförmige Objekt unmittelbar nach dem Verlassen des auf der Trommel anliegenden Wickels durch die Längenmesseinrichtung hindurchtritt und von dieser seitlich aus dem Gehäuse nach außen geführt wird. Aufgrund der minimalen Umlenkungen wird eine hohe Genauigkeit erreicht.

Und das stabförmige Objekt vom Wickel zu lösen, ist es erforderlich, eine seitliche, nach innen gerichtete Kraft auf das Objekt aufzubringen. Reibungswiderstände können insbesondere dadurch minimiert werden, dass die Längenmesseinrichtung mindestens eine Laufrolle aufweist, über die das Objekt geführt wird.

Die erfindungsgemäße Lösung ist so gestaltet, dass eine Messrolle vorgesehen ist und dass die Längenmesseinrichtung die Drehung der Messrolle erfasst und auswertet. Vorzugsweise kann dabei eine Erfassung über einen Hall-Sensor angewendet werden. Dieses Messprinzip ist robust und wenig anfällig gegenüber Verschmutzung. Da abgesehen von der Messrolle keine beweglichen Teile vorgesehen sind, ist das System verschleißarm und langlebig. Wenn der Hall-Sensor unabhängig von der Messrolle befestigt ist, kann eine Konstruktion dargestellt werden, die durch leichte Zerlegbarkeit besonders wartungsfreundlich ist. So kann der Hall-Sensor bevorzugt in einer Baugruppe mit einer Auswerteschaltung und einem Anzeigeelement angeordnet sein.

Besonders wartungsfreundlich ist es dabei, wenn die Baugruppe auf einem vom Gehäuse abnehmbaren Abdeckelement angeordnet ist. Damit ist beispielsweise der Austausch von Batterien für die die Längenmesseinrichtung besonders einfach möglich.

Selbstverständlich und erfindungsgemäß, muss bei Systemen mit einer Messrolle gewährleistet werden,
dass die Messrolle permanent am stabförmigen Objekt anliegt, um Messfehler zu vermeiden. Sofern die Vorspannung des Objekts nicht ausreicht, um ein sicheres Anliegen an der Messrolle zu gewährleisten, kann die Messrolle durch eine Feder vorgespannt sein.

Es ist besonders günstig, wenn die Messrolle auf einem Schwenkarm gelagert ist, dessen Schwenkachse vorzugsweise in einer gedachten Ebene liegt, die senkrecht auf die Drehachse der Trommel angeordnet ist. Die Schwenkachse des Schwenkarms selbst ist damit auch senkrecht auf die Drehachse der Trommel, ohne diese notwendigerweise zu schneiden. Das Objekt verteilt sich beim Aufrollen bzw. Abrollen über die Breite der Trommel, was dementsprechend zu einer Änderung des Austrittswinkels des Objekts aus der Längenmesseinrichtung führt. Dies kann auch durch die Bewegung des Schwenkarms ausgeglichen werden.

Beim Aufrollen des Objekts verringert sich naturgemäß der Innendurchmesser des Wickels, je nachdem wie viele Lagen bereits innen an der Trommel anliegen. Um dem Rechnung zu tragen und den Auftreffwinkel des Objekts unabhängig vom Füllzustand der Trommel optimal zu halten, kann vorgesehen sein, dass die Längenmesseinrichtung um eine Schwenkachse schwenkbar am Gehäuse gelagert ist. Dabei ist es vorteilhaft, wenn die Schwenkachse im Wesentlichen parallel zur Drehachse der Trommel angeordnet ist.

Eine begünstigte Ausführungsvariante der Erfindung sieht vor, dass die Längenmesseinrichtung im Bereich des Umfangs der Trommel angeordnet ist. Dies bedeutet, dass die Längenmesseinrichtung so weit als möglich vom Mittelpunkt der Trommel entfernt angeordnet ist, so dass das Objekt beim Einführen möglichst tangential auf die Innenseite der Trommel oder den bereits vorliegenden Wickel auftrifft. Es ist dabei auch günstig, wenn die Vorrichtung einen Handgriff aufweist und wenn die Längenmesseinrichtung im Bereich des Handgriffs angeordnet ist. Dadurch ergibt sich ein geringer Abstand zwischen Handgriff und Austrittsöffnung, was bei der Handhabung vorteilhaft ist.

Eine weitere Steigerung der Nutzbarkeit wird erreicht, wenn das Gehäuse eine zentrale Ausnehmung aufweist, in der eine Aufnahmebox angeordnet ist. Damit können Kleinteile, Zubehör, wie alternative Einziehfederspitzen oder dgl. griffbereit in der Vorrichtung gelagert werden.

Konstruktiv ist es begünstigt, wenn die Trommel an der Rückseite des Gehäuses gelagert ist.

Ein sicherer und gleichmäßiger Lauf des Objekts durch die Längenmesseinrichtung wird erreicht, wenn die Längenmesseinrichtung ein Messelement und mindestens eine zwischen Messelement und Trommel angeordnete hintere Führung für das Objekt aufweist. Dabei soll der Bereich zwischen Messelement und Trommel so definiert sein, dass er an dem Punkt des Messelements beginnt, der der Austrittsöffnung des Gehäuses am nächsten ist und dort endet, wo der Stab typischerweise auf die Trommel bzw. den Wickel auftrifft. Das Messelement ist gemäß der obigen bevorzugten Variante das Messrad, ansonsten beispielsweise ein optisches Messelement. Die Führung stellt sicher, dass der Stab auch dann, wenn beispielsweise Torsionsmomente auftreten, seitliche Bewegungen hervorrufen können, stets geordnet durch das Messelement geführt wird.

Eine verbesserte Führung des Objekts kann auch dadurch erreicht werden, dass die Längenmesseinrichtung ein Messelement und mindestens eine zwischen Messelement und Austrittsöffnung angeordnete vordere Führung für das Objekt aufweist. Durch eine Kombination von vorderen und hinteren Führungen kann insbesondere eine Schrägstellung des Objekts vermieden werden.

Die Führungen können als Gleitführungen, vorzugsweise als Bügel oder Ringführungen ausgebildet sein. Wesentlich ist eine wirksame Beschränkung des Bewegungsspielraums im Bereich des Messrades oder des sonstigen Messelements.

Es ist besonders günstig, wenn die hintere Führung und/oder die vordere Führung das Objekt mit Spiel führen. Dadurch kann im Normalfall die Reibung wesentlich reduziert werden, da das Objekt zeitweise überhaupt nicht oder nur mit geringer Auflagekraft an der Führung anliegt. Es ist dabei auch vorteilhaft, wenn das Spiel in Radialrichtung bezogen auf die Drehachse der Trommel kleiner ist als bezogen auf eine Richtung senkrecht dazu, also eine Richtung parallel zur Drehachse der Trommel. Dies bedeutet, dass eine seitliche Bewegung des Objekts, die beim Auf- oder Abwickeln jedenfalls zu verzeichnen ist, in einem größeren Ausmaß zugelassen wird als eine Bewegung innerhalb der Ebene der Trommel, die auch das Messergebnis stärker beeinträchtigen würde, da sich das Objekt dabei zumindest schräg zur Messrolle stellen würde oder sogar den Kontakt zu ihr verlieren würde.

Um die auftretende Reibung zu verringern, können die Führungen auch als Führungsrollen ausgebildet sein.

Konstruktiv ist es günstig, wenn zumindest eine hintere Führung einstückig mit einer Halterung für die Messrolle ausgebildet ist.

Eine weitere Verbesserung kann erreicht werden, wenn eine hintere Führung als am Gehäuse befestigter Stab ausgebildet ist. Auf diese Weise wird nur die Bewegung innerhalb der Trommelebene limitiert, ohne die seitliche Bewegung zu behindern, die für die gleichmäßige Ausbildung des Wickels notwendig ist.

Eine besonders gute Wirksamkeit der Führung wird erreicht, wenn zumindest eine Führung im Bereich des Messelements angeordnet ist.

Es ist vorteilhaft, wenn das Gehäuse aus zwei Gehäusehälften besteht. Diese können dann als Spritzgussbauteile ausgeführt werden.

In der Folge wird die vorliegende Erfindung anhand der in Ausführungsbeispielen dargestellten Ausführungsvarianten näher erläutert. Es zeigen:
- Fig. 1: eine erfindungsgemäße Vorrichtung in einer Schrägansicht von vorne;

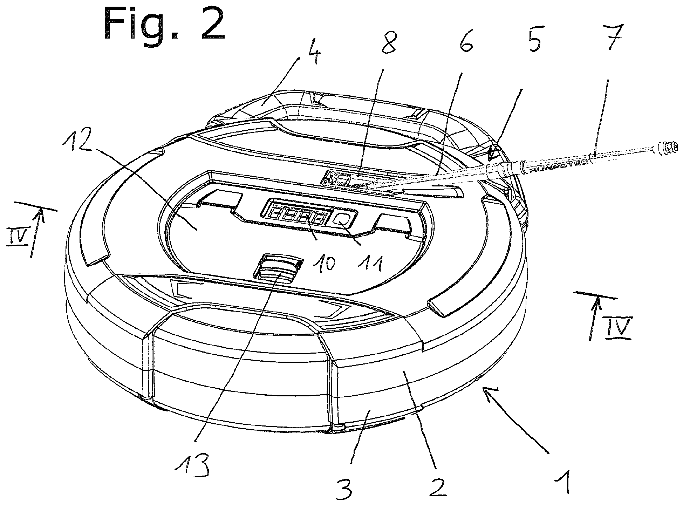

- Fig. 2: die Vorrichtung von Fig. 1 in einer alternativen Schrägansicht;
- Fig. 3: ein Detail von Fig. 2 mit abgenommenem Abdeckelement;

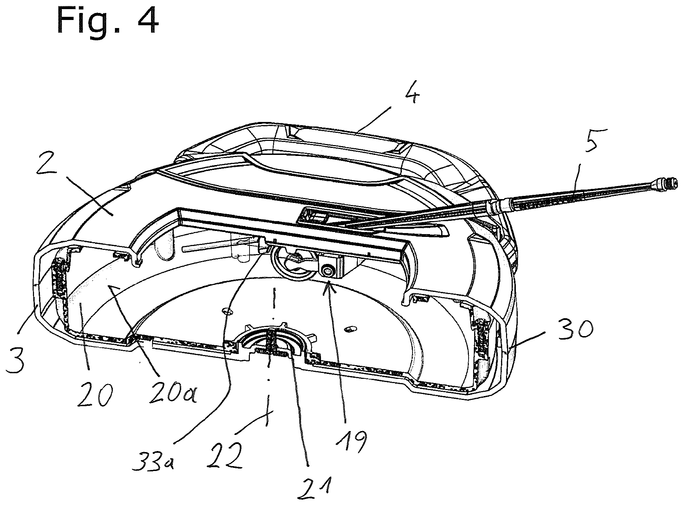

- Fig. 4: eine geschnittene Schrägdarstellung mit Schnitt nach Linie IV - IV in Fig. 2;
- Fig. 5: eine geschnittene Schrägdarstellung entsprechend Fig. 4 aus einem unterschiedlichen Blickwinkel;
- Fig. 6: ein Detail der Längenmesseinrichtung;

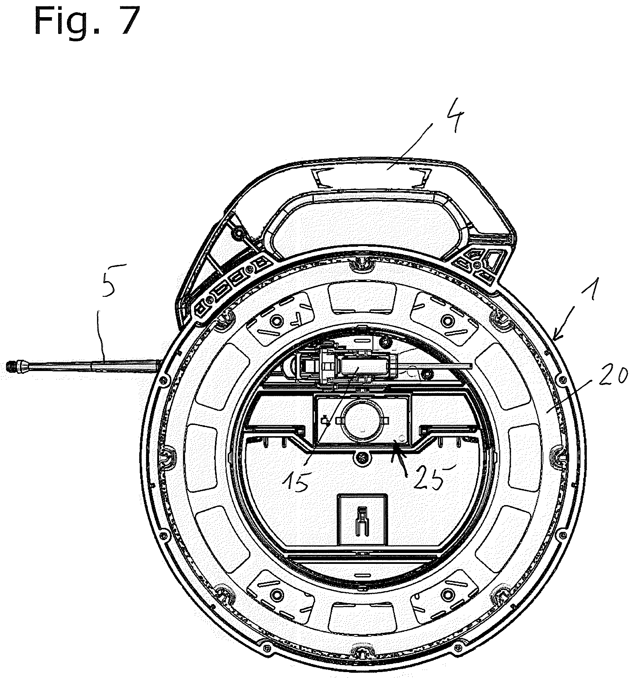

- Fig. 7: die Vorrichtung von Fig. 1 bis Fig. 6 in einer Ansicht von hinten mit abgenommener hinterer Gehäusehälfte; und
- Fig. 8,: Fig. 9, Fig. 10, Fig. 10a, Fig. 11 und Fig. 12 weitere Details der Längenmesseinrichtung.

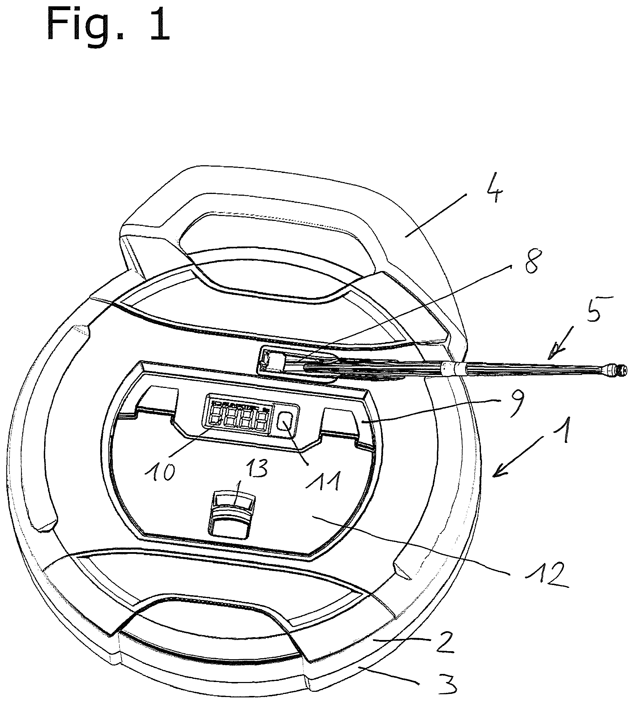

Die Vorrichtung von Fig. 1 besitzt ein Gehäuse 1, das aus einer oberen Gehäusehälfte 2 und einer unteren Gehäusehälfte 3 besteht und an dem ein Handgriff 4 vorgesehen ist. Ein flexibles Objekt 5, nämlich eine Einziehfeder 6 mit einer Einziehfederspitze 7 tritt aus dem Inneren des Gehäuses 1 über eine Austrittsöffnung 8 aus und kann bei Bedarf herausgezogen oder eingeschoben werden.

Im mittleren Bereich der oberen Gehäusehälfte 2 ist ein abnehmbares Abdeckelement 9 vorgesehen, das ein Anzeigeelement 10 und einen Rückstellknopf 11 trägt, mit dem die jeweils angezeigte Länge zurückgesetzt werden kann. Daneben ist eine herausnehmbare Aufnahmebox 12 vorgesehen, in der ein Benutzer der Vorrichtung Kleinteile, wie etwa Einziehfederspitzen, aufbewahren kann. Die Aufnahmebox 12 ist über ein Verschlusselement am Gehäuse 1 gesichert.

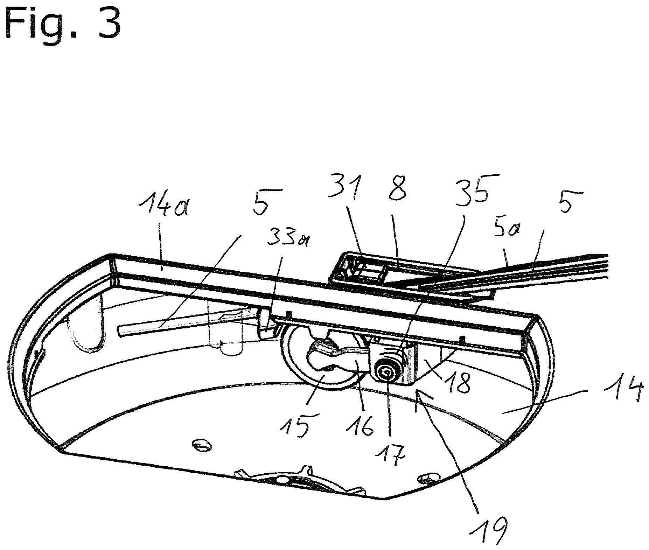

In der Fig. 3 ist die zentrale Ausnehmung 14 der oberen Gehäusehälfte 2 des Gehäuses 1 mit dem Öffnungsrand 14a dargestellt, die sich ergibt, wenn das abnehmbare Abdeckelement 9 und die herausnehmbare Aufnahmebox 12 entfernt sind.

Im Inneren des Gehäuses 1 ist eine Messrolle 15 vorgesehen, die auf einem Schwenkarm 16 gelagert ist, der seinerseits über eine Schwenkachse 17 schwenkbar an einer Halterung 18 gelagert ist, wobei der Schwenkarm 16 samt Messrolle 15 durch eine Feder 35 gegen das Objekt 5 vorgespannt ist. Die Messrolle 15 samt Schwenkarm 16 und Halterung 18 werden hier als Längenmesseinrichtung 19 bezeichnet.

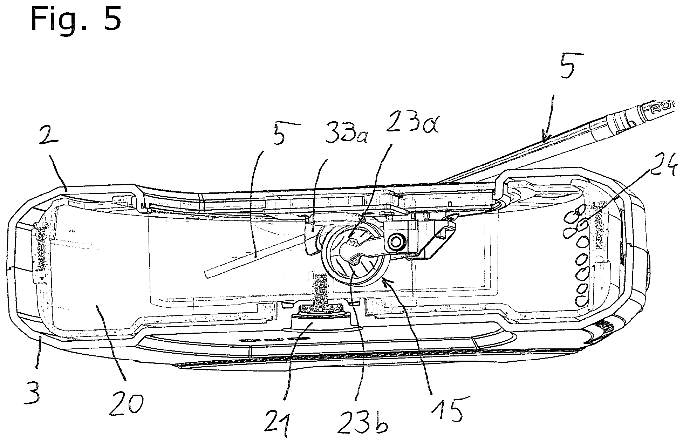

Im Inneren des Gehäuses 1 ist eine Trommel 20 in einem Lager 21 drehbar gelagert, welches Lager 21 zentral auf der unteren Gehäusehälfte 3 angeordnet ist. Die Innenfläche 20a der Trommel 20 ist zur Aufnahme des in Fig. 5 angedeuteten Wickels 24 des Objekts 5 vorgesehen.

Es ist in Fig. 5 auch ersichtlich, dass in der Messrolle 15 zwei halbkreisförmige Permanentmagnete 23a und 23b vorgesehen sind, die bei der Drehung der Messrolle 15 ein rotierendes Magnetfeld erzeugen.

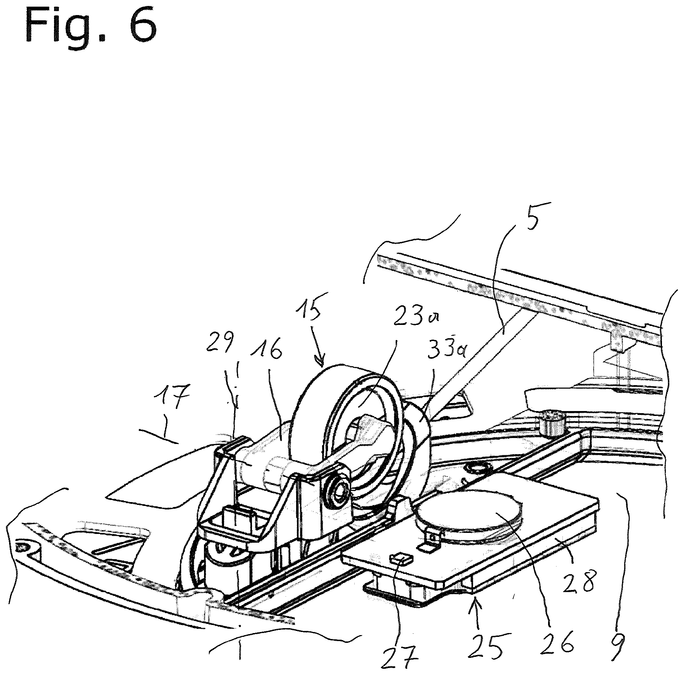

Fig. 6 zeigt, dass eine Baugruppe 25 auf der Innenseite des Abdeckelements 9 angebracht ist. Die Baugruppe 25 besteht aus einem Hall-Sensor 27 und einer Auswerteschaltung 28, die von einer Batterie 26 versorgt werden. Der Hall-Sensor 27 erfasst das rotierende Magnetfeld der Messrolle 15 und damit kann die über die Messrolle 15 gezogene Länge des Objekts 5 berechnet werden. Nicht sichtbar in Fig. 6 sind das außen auf der Baugruppe 25 angeordnete Anzeigeelement 10 und der Rückstellknopf 11. Durch die getrennte Anordnung der Baugruppe 25 auf dem Abdeckelement 9 kann die Wartung erleichtert werden und es ist eine mechanische Entkoppelung von der Messrolle 15 gegeben.

Der Schwenkarm 16 kann um eine weitere Schwenkachse 29 schwenkbar sein, welche weitere Schwenkachse 29 parallel zur Drehachse 22 der Trommel 20 ist, die senkrecht auf eine gedachte Ebene steht, die durch die Dichtfläche zwischen der oberen Gehäusehälfte 2 und der unteren Gehäusehälfte 3 definiert ist. Die Schwenkachse 17 des Schwenkarms 16 ist parallel zu dieser gedachten Ebene.

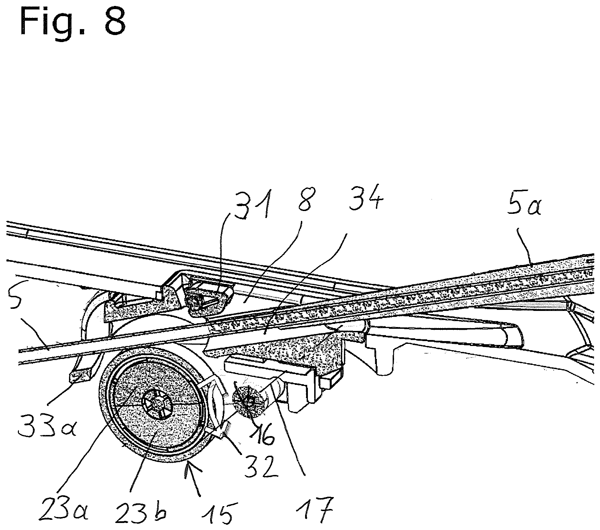

Fig. 8 zeigt im Detail die als Ringführung ausgebildete hintere Führung 33a für das Objekt 5, die zwischen dem Messelement - hier in Form der Messrolle 15 - und der hier nicht sichtbaren Trommel 20 angeordnet ist. Die Ringführung ist nach vorne offen, was das Einlegen des Objekts erleichtert. Eine vordere Führung 34 für das Objekt 5 ist unmittelbar in Anschluss an die Austrittsöffnung 8 in Form eines geschlossenen Kanals gebildet.

Eine Einzugssicherung 31 in der Form einer federnden Klappe am Rand der Austrittsöffnung 8 ist dazu vorgesehen, ein unbeabsichtigtes völliges Einziehen des Objekts 5 zu verhindern. Sobald der verdickte Bereich 5a an der Übergangsstelle zur Einziehfederspitze 7 die Austrittsöffnung 8 erreicht, verklemmt er sich in der Einzugssicherung 31 und begrenzt das Einschieben. Das Herausziehen wird jedoch nicht behindert. Ferner ist in Fig. 8 die Schwenkbewegung des Schwenkarms 16 um die Schwenkachse 17 durch den Doppelpfeil 32 angedeutet.

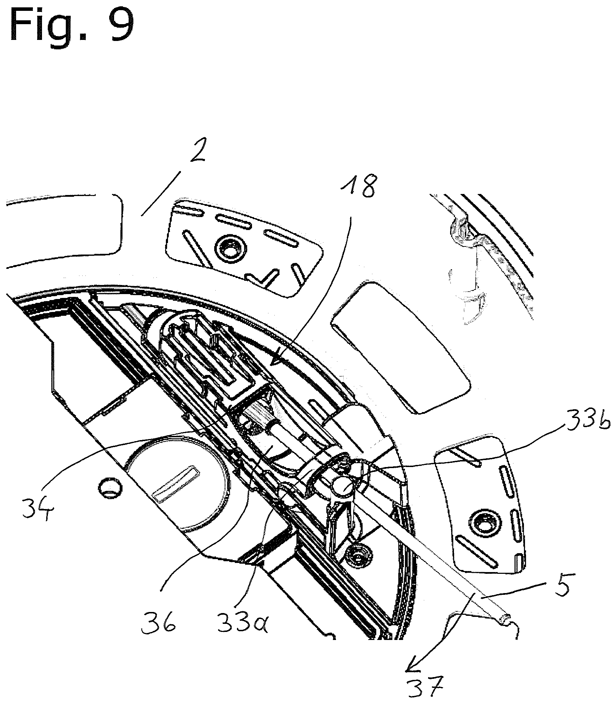

In Fig. 9 ist die Halterung 18 mit weggebrochener Messrolle dargestellt, wobei die Ansicht von der entfernten hinteren Gehäusehälfte auf die vordere Gehäusehälfte 2 gerichtet ist, auf der die Halterung 18 befestigt ist. Die hintere Führung 33a ist unmittelbar neben der Ausnehmung 36 angeordnet und befindet sich daher im Bereich des Messeelements. Die Ausnehmung 36 dient dazu, den Kontakt der Messrolle 15 mit dem Objekt 5 zu ermöglichen. Die vordere Führung 34 ist ebenfalls Teil der Halterung 18 und befindet sich auch im Bereich des Messeelements.

Eine zusätzliche hintere Führung 33b ist in der Form eines zur Drehachse 22 parallelen Stabes an der vorderen Gehäusehälfte 2 befestigt. Diese zusätzliche hintere Führung 33b führt das Objekt 5 nur in Radialrichtung der Trommel 20. Ihre Aufgabe ist es, bei sehr starkem Zug auf das Objekt 5 und/oder in Situationen, in denen die Drehung der Trommel 20 erschwert ist, zu verhindern, dass das Objekt 5 seitlich in Richtung des Pfeils 37 ausweicht und von der Messrolle 15 nicht mehr optimal erfasst werden kann.

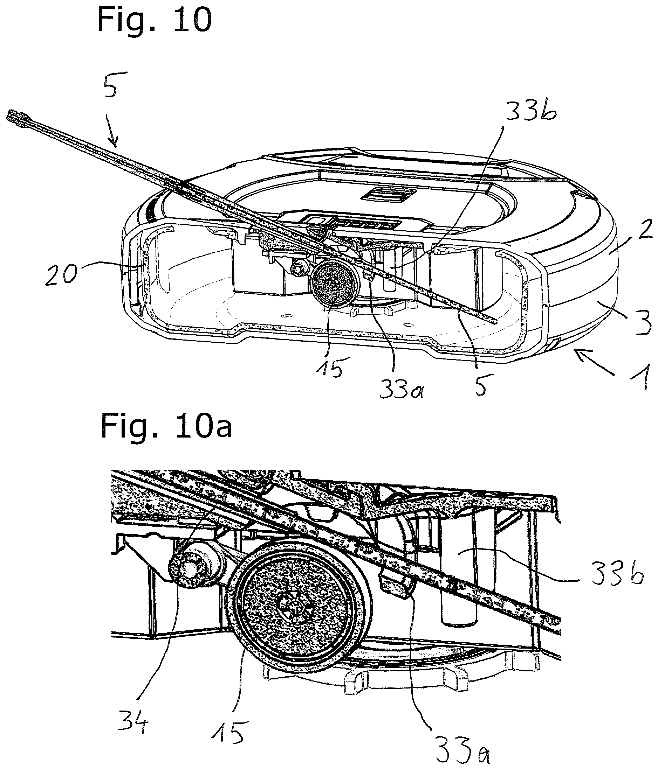

In der Fig. 10 mit dem Detail in Fig. 10a ist die Situation in einer Darstellung ersichtlich, in der der den Griff 4 umfassende Teil des Gehäuses 1 weggebrochen ist.

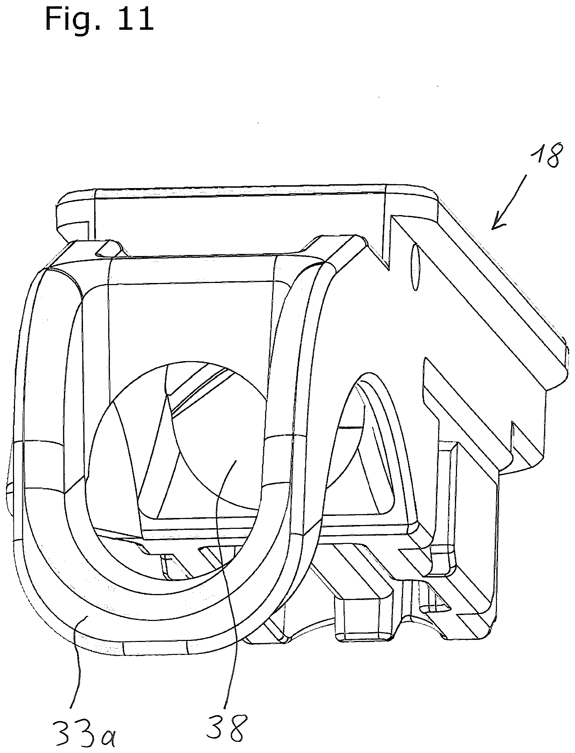

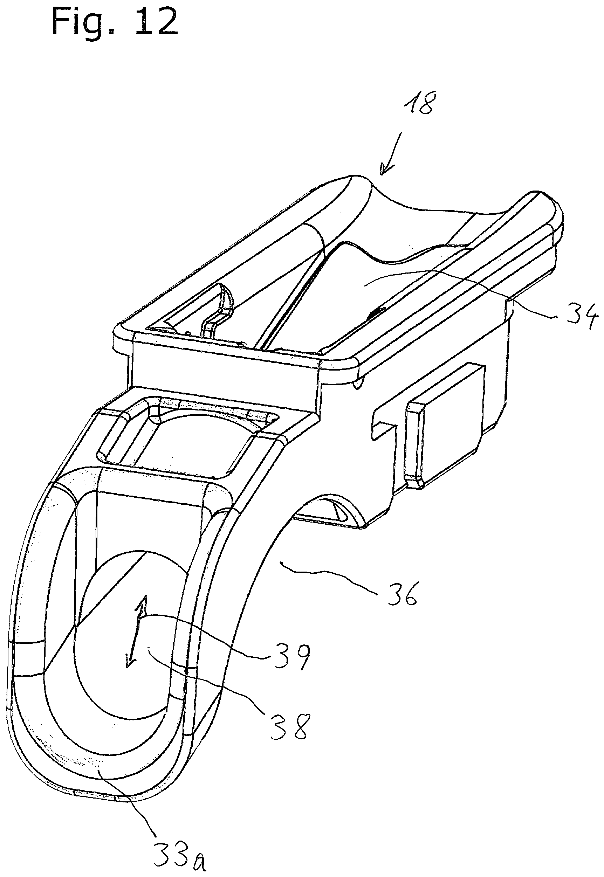

Die Fig. 11 und Fig. 12 zeigen die Halterung 18 im Detail, wobei insbesondere die Öffnung 38 ersichtlich ist, die von der hinteren Führung 33a begrenzt ist. Vorzugsweise ist die Öffnung 38 oval, so dass ihre Erstreckung in der Symmetrieebene, also in Richtung des Doppelpfeils 39, etwas größer ist als quer dazu. Jedenfalls sollte ein Spiel von einigen Zehntelmillimeter gegenüber dem hier nicht sichtbaren Stab gegeben sein. Die vordere Führung 34 ist als Führungskanal an der gegenüberliegenden Seite der Halterung 18 zu erkennen.

Die erfindungsgemäße Vorrichtung ermöglicht es, zuverlässig und genau die Länge eines abgerollten Objekts zu bestimmen.

## Patentansprüche

1. Vorrichtung zum Abrollen eines biegsamen stabförmigen Objekts (5) mit einem Gehäuse (1), einer im Inneren des Gehäuses (1) angeordneten drehbaren Trommel (20), die eine zylindrische Innenfläche (20a) aufweist, die dazu ausgebildet ist, das Objekt (5) abzustützen, wobei das Gehäuse (1) eine Austrittsöffnung (8) aufweist, durch die das Objekt (5) aus dem Inneren des Gehäuses (1) herausgeführt oder in dieses hineingeführt werden kann, und wobei eine Längenmesseinrichtung (19) zur Messung der Länge des herausgeführten oder hineingeführten Objekts (5) vorgesehen ist, **dadurch gekennzeichnet, dass** die Längenmesseinrichtung (19) im Wesentlichen im Inneren der drehbaren Trommel (20) angeordnet und am Gehäuse (1) befestigt ist und dass eine permanent am Objekt (5) anliegende Messrolle (15) vorgesehen ist, deren Drehung durch die Längenmesseinrichtung (19) erfasst und ausgewertet wird.

2. Vorrichtung nach Anspruch 1, **dadurch gekennzeichnet, dass** die Längenmesseinrichtung (19) mindestens eine Laufrolle aufweist, über die das Objekt (5) geführt wird.

3. Vorrichtung nach Anspruch 1 oder 2, **dadurch gekennzeichnet, dass** die Längenmesseinrichtung (19) einen Hall-Sensor (27) aufweist, der vorzugsweise unabhängig von der Messrolle (15) befestigt ist.

4. Vorrichtung nach Anspruch 3, **dadurch gekennzeichnet, dass** der Hall-Sensor (27) in einer Baugruppe (25) mit einer Auswerteschaltung (28) und einem Anzeigeelement (10) angeordnet ist und dass die Baugruppe (25) vorzugsweise auf einem vom Gehäuse (1) abnehmbaren Abdeckelement (9) angeordnet ist.

5. Vorrichtung nach einem der Ansprüche 1 bis 4, **dadurch gekennzeichnet, dass** die Messrolle (15) durch eine Feder (35) vorgespannt ist.

6. Vorrichtung nach Anspruch 5, **dadurch gekennzeichnet, dass** die Messrolle (15) auf einem Schwenkarm (16) gelagert ist, dessen Schwenkachse (17) vorzugsweise in einer gedachten Ebene liegt, die senkrecht auf die Drehachse (22) der Trommel (20) angeordnet ist.

7. Vorrichtung nach einem der Ansprüche 1 bis 6, **dadurch gekennzeichnet, dass** die Längenmesseinrichtung (19) um eine weitere Schwenkachse (29) schwenkbar am Gehäuse (1) gelagert ist, die vorzugsweise im Wesentlichen parallel zur Drehachse (22) der Trommel (20) angeordnet ist.

8. Vorrichtung nach einem der Ansprüche 1 bis 7, **dadurch gekennzeichnet, dass** die Längenmesseinrichtung (19) im Bereich des Umfangs der Trommel (20) angeordnet ist.

9. Vorrichtung nach einem der Ansprüche 1 bis 8, **dadurch gekennzeichnet, dass** das Gehäuse (1) einen Handgriff (4) aufweist und dass die Längenmesseinrichtung (19) im Bereich des Handgriffs (4) angeordnet ist.

10. Vorrichtung nach einem der Ansprüche 1 bis 9, **dadurch gekennzeichnet, dass** das Gehäuse (1) eine zentrale Ausnehmung (14) aufweist, in der eine Aufnahmebox (12) angeordnet ist.

11. Vorrichtung nach einem der Ansprüche 1 bis 10, **dadurch gekennzeichnet, dass** die Längenmesseinrichtung (19) ein Messelement und mindestens eine zwischen Messelement und Trommel (20) angeordnete hintere Führung (33a, 33b) für das Objekt (5) aufweist.

12. Vorrichtung nach einem der Ansprüche 1 bis 11, **dadurch gekennzeichnet, dass** die Längenmesseinrichtung (19) ein Messelement und mindestens eine zwischen Messelement und Austrittsöffnung (8) angeordnete vordere Führung (34) für das Objekt (5) aufweist.

13. Vorrichtung nach einem der Ansprüche 11 oder 12, **dadurch gekennzeichnet, dass** die Führung (33a, 33b; 34) das Objekt mit Spiel führt und dass das Spiel in Radialrichtung bezogen auf die Drehachse (22) der Trommel (20) kleiner ist als bezogen auf eine Richtung senkrecht dazu.

14. Vorrichtung nach einem der Ansprüche 11 bis 13, **dadurch gekennzeichnet, dass** zumindest eine hintere Führung (33a) einstückig mit einer Halterung (18) für die Messrolle (15) und/oder als am Gehäuse (1) befestigter Stab ausgebildet ist.

15. Vorrichtung nach einem der Ansprüche 11 bis 14, **dadurch gekennzeichnet, dass** zumindest eine Führung (33a, 33b; 34) im Bereich des Messelements angeordnet ist.

## Claims

1. Device for unrolling a flexible rod-shaped object (5) with a housing (1), a rotatable drum (20) which is arranged inside the housing (1) and has a cylindrical inner surface (20a) designed to support the object (5), wherein the housing (1) has an outlet opening (8) through which the object (5) can be guided out of or into the interior of the housing (1), and wherein a length measuring device (19) is provided for measuring the length of the object (5) guided out or in, **characterised in that** the length measuring device (19) is arranged substantially inside the rotatable drum (20) and is attached to the housing (1), and **in that** a measuring roller (15) is provided which is permanently in contact with the object (5) and whose rotation is detected and evaluated by the length measuring device (19).

2. Device according to claim 1, **characterised in that** the length measuring device (19) has at least one roller over which the object (5) is guided.

3. Device according to claim 1 or 2, **characterised in that** the length measuring device (19) has a Hall sensor (27) which is preferably attached independently of the measuring roller (15).

4. Device according to claim 3, **characterised in that** the Hall sensor (27) is arranged in an assembly (25) with an evaluation circuit (28) and a display element (10) and **in that** the assembly (25) is preferably arranged on a cover element (9) that can be removed from the housing (1).

5. Device according to one of claims 1 to 4, **characterised in that** the measuring roller (15) is preloaded by a spring (35).

6. Device according to claim 5, **characterised in that** the measuring roller (15) is mounted on a pivot arm (16), the pivot axis (17) of which is preferably located in an imaginary plane that is perpendicular to the axis of rotation (22) of the drum (20).

7. Device according to one of claims 1 to 6, **characterised in that** the length measuring device (19) is pivotably mounted on the housing (1) about a further pivot axis (29), which is preferably arranged substantially parallel to the axis of rotation (22) of the drum (20).

8. Device according to one of claims 1 to 7, **characterised in that** the length measuring device (19) is arranged in the region of the circumference of the drum (20).

9. Device according to one of claims 1 to 8, **characterised in that** the housing (1) has a handle (4) and **in that** the length measuring device (19) is arranged in the region of the handle (4).

10. Device according to one of claims 1 to 9, **characterised in that** the housing (1) has a central recess (14) in which a receiving box (12) is arranged.

11. Device according to one of claims 1 to 10, **characterised in that** the length measuring device (19) has a measuring element and at least one rear guide (33a, 33b) for the object (5) arranged between the measuring element and the drum (20).

12. Device according to one of claims 1 to 11, **characterised in that** the length measuring device (19) has a measuring element and at least one front guide (34) for the object (5) arranged between the measuring element and the outlet opening (8).

13. Device according to one of claims 11 or 12, **characterised in that** the guide (33a, 33b; 34) guides the object with play and **in that** the play in the radial direction relative to the axis of rotation (22) of the drum (20) is smaller than relative to a direction perpendicular thereto.

14. Device according to one of claims 11 to 13, **characterised in that** at least one rear guide (33a) is formed integrally with a holder (18) for the measuring roller (15) and/or as a rod attached to the housing (1).

15. Device according to one of claims 11 to 14, **characterised in that** at least one guide (33a, 33b; 34) is arranged in the region of the measuring element.

## Revendications

1. Appareil de déroulement d'un objet (5) flexible en forme de tige, comprenant un boîtier (1), un tambour (20) tournant monté à l'intérieur du boîtier (1) et ayant une surface (20a) intérieure cylindrique, qui est constituée pour supporter l'objet (5), dans lequel le boîtier (1) a une ouverture (8) de sortie, par laquelle l'objet (5) peut être sorti de l'intérieur du boîtier (1) ou y être rentré, et dans lequel il est prévu un dispositif (19) de mesure de longueur pour mesurer la longueur de l'objet (5) sorti ou rentré, **caractérisé en ce que** le dispositif (19) de mesure de longueur est disposé sensiblement à l'intérieur du tambour (20) tournant et est fixé au boîtier (1) et **en ce que** il est prévu un rouleau (15) de mesure s'appliquant en permanence à l'objet (5) et dont la rotation est détectée et évaluée par le dispositif (19) de mesure de longueur.

2. Appareil suivant la revendication 1, **caractérisé en ce que** le dispositif (19) de mesure de longueur a, au moins, un galet de roulement sur lequel passe l'objet (5).

3. Appareil suivant la revendication 1 ou 2, **caractérisé en ce que** le dispositif (19) de mesure de longueur a un capteur (27) de Hall qui est fixé de préférence indépendamment du rouleau (15) de mesure.

4. Appareil suivant la revendication 3, **caractérisé en ce que** le capteur (27) de Hall est disposé dans un module (25) ayant un circuit (28) d'évaluation et un élément (10) d'affichage et **en ce que** le module (25) est disposé de préférence sur un élément (9) de recouvrement pouvant être retiré du boîtier (1).

5. Appareil suivant l'une des revendications 1 à 4, **caractérisé en ce que** le rouleau (15) de mesure est précontraint par un ressort (35).

6. Appareil suivant la revendication 5, **caractérisé en ce que** le rouleau (15) de mesure est monté sur un bras (16) pivotant, dont l'axe (17) de pivotement se trouve de préférence dans un plan imaginaire, qui est perpendiculaire à l'axe (22) de rotation du tambour (20).

7. Appareil suivant l'une des revendications 1 à 6, **caractérisé en ce que** le dispositif (19) de mesure de longueur est monté sur le boîtier (1) pivotant autour d'un autre axe (29) de pivotement, qui est disposé, de préférence sensiblement parallèlement à l'axe (22) de rotation du tambour (20).

8. Appareil suivant l'une des revendications 1 à 7, **caractérisé en ce que** le dispositif (19) de mesure de longueur est disposé dans la zone du pourtour du tambour (20).

9. Appareil suivant l'une des revendications 1 à 8, **caractérisé en ce que** le boîtier (1) a une poignée (4) et **en ce que** le dispositif (19) de mesure de longueur est disposé dans la zone de la poignée (4).

10. Appareil suivant l'une des revendications 1 à 9, **caractérisé en ce que** le boîtier (1) a un évidement (14) central, dans lequel est disposée une boîte (12) de réception.

11. Appareil suivant l'une des revendications 1 à 10, **caractérisé en ce que** le dispositif (19) de mesure de longueur a un élément de mesure et, disposé entre l'élément de mesure et le tambour (20), au moins un guidage (33a, 33b) arrière de l'objet (5).

12. Appareil suivant l'une des revendications 1 à 11, **caractérisé en ce que** le dispositif (19) de mesure de longueur a un élément de mesure et, disposé entre l'élément de mesure et l'ouverture (8) de sortie, au moins un guidage (34) avant de l'objet (5).

13. Appareil suivant l'une des revendications 11 ou 12, **caractérisé en ce que** le guidage (33a, 33b ; 34) de l'objet guide l'objet avec jeu et **en ce que** le jeu dans la direction radiale, rapporté à l'axe (22) de rotation du tambour (20) est plus petit que rapporté à une direction, qui lui est perpendiculaire.

14. Appareil suivant l'une des revendications 11 à 13, **caractérisé en ce qu'**au moins un guidage (33a) arrière est constitué d'une seule pièce avec une fixation (18) du rouleau (15) de mesure et/ou comme barrette fixée au boîtier (1).

15. Appareil suivant l'une des revendications 11 à 14, **caractérisé en ce qu'**au moins un guidage (33a, 33b ; 34) est disposé dans la zone de l'élément de mesure.
